(19) Europäisches Patentamt / European Patent Office / Office européen des brevets

(11) **EP 2 042 732 B1**

(12) **EUROPEAN PATENT SPECIFICATION**

(45) Date of publication and mention
of the grant of the patent:
**09.03.2016 Bulletin 2016/10**

(21) Application number: **07767988.4**

(22) Date of filing: **02.07.2007**

(51) Int Cl.:
*F04B 27/18* *(2006.01)*     *F04B 27/14* *(2006.01)*

(86) International application number:
**PCT/JP2007/063213**

(87) International publication number:
**WO 2008/010404 (24.01.2008 Gazette 2008/04)**

(54) **CAPACITY CONTROL VALVE OF VARIABLE CAPACITY COMPRESSOR**

LEISTUNGSREGELUNGSVENTIL EINES VERDICHTERS MIT VARIABLER LEISTUNG

VALVE DE COMMANDE DE CAPACITE DE COMPRESSEUR A CAPACITE VARIABLE

(84) Designated Contracting States:
**DE FR HU**

(30) Priority: **19.07.2006   JP 2006196396**

(43) Date of publication of application:
**01.04.2009   Bulletin 2009/14**

(73) Proprietor: **Sanden Corporation
Isesaki-shi,
Gunma 372-8502 (JP)**

(72) Inventor: **TAGUCHI, Yukihiko
Isesaki-shi
Gunma 372-8502 (JP)**

(74) Representative: **Prüfer & Partner mbB
Patentanwälte · Rechtsanwälte
Sohnckestraße 12
81479 München (DE)**

(56) References cited:
**EP-A1- 1 223 342     EP-A1- 1 507 109
EP-A2- 0 907 021     EP-A2- 1 574 711
JP-A- 11 107 929     JP-A- 2001 073 940
JP-A- 2006 177 210   KR-A- 20060 082 414**

## Description

A displacement control valve of a variable displacement compressor

Technical Field

The present invention relates to a displacement control valve of a variable displacement compressor as defined in the preamble of claim 1. Such a valve is known from EP 907021.

Background Art

Patent Document No. 1: Japanese Patent Laid- Open Publication No.11-107929 and EP 0 907 021 A2;
Patent Document No. 2: KR 2006 0082414 A and EP 1 681 466 A2;
Patent Document No. 3: EP 1 223 342 A1;
Patent Document No. 4: EP 1 507 109 A1;
Patent Document No. 5: EP 1 574 711 A2.

Patent Document No. 1 teaches a displacement control valve of a variable displacement compressor for opening and closing a communication passage extending between a portion of the compressor on which discharge pressure acts and a crank chamber of the compressor, thereby controlling the displacement of the compressor, comprising a valve hole communicating with the crank chamber at one end and opening to a valve chamber at the other end, a valve body for opening and closing the valve hole at one end located in the valve chamber communicating with the portion of the compressor on which discharge pressure acts, a bulkhead provided with a supporting hole for slidably supporting the valve body and shutting the other end of the valve body off from the valve chamber, a pressure inlet passage for allowing crank chamber pressure to act on the other end of the valve body, and a driver for driving the valve body in a direction for opening and closing the valve hole.

The displacement control valve taught by Patent Document No. 1 has an advantage in that discharge chamber pressure does not act on the valve body in the direction for opening and closing the valve hole.

Patent Document No 2 discloses a control valve for a variable displacement compressor for opening and closing a communication passage extending between a discharge chamber and a crank case. The valve comprises a drive and a valve hole communicating with the crank case at one end and opening to a valve chamber at the other end. A valve body for opening and closing the valve hole is located on the side of the valve hole communicating with the crank case so that, in this document, the discharge chamber pressure acts on the valve body in the direction for opening and closing the valve hole.

The control valve for a variable displacement compressor of patent document No. 3 comprises the features according to the preamble of claim 1 except the feature that discharge chamber pressure acts on the other end of the valve body so that the discharge chamber pressure acts on the valve body in the direction for opening and closing the valve hole due to the difference between the pressure receiving area of the one end of the valve body opposing the valve hole and that of the other end of the valve body.

Patent Document No. 4 shows a displacement control valve according to the preamble of claim 1.

Patent Document No. 5 discloses a control valve for a variable displacement compressor for opening and closing a communication passage extending between a discharge chamber and a crank case. The valve comprises a drive and a valve hole communicating with the crank case at one end and opening to a valve chamber at the other end. A valve body for opening and closing the valve hole is located on the side of the valve hole communicating with the crank case so that, also in this document, the discharge chamber pressure acts on the valve body in the direction for opening and closing the valve hole.

Disclosure of Invention

Problem to be solved

The displacement control valve of Patent Document No. 1 has the following problems.

(1) The structure of the displacement control valve is complex because the pressure inlet passage for allowing crank chamber pressure to act on the other end of the valve body is disposed independent of the communication passage extending between the portion of the compressor on which discharge pressure acts and the crank chamber of the compressor.

(2) The pressure inlet passage functions to lead discharge gas leaked from the valve chamber to the side of the other end of the valve body through a space between the valve body and the supporting hole to the crank room, in addition to functioning to allow the crank chamber pressure to act on the other end of the valve body. Therefore, the pressure inlet passage desirably has sufficiently large cross sectional area. However, it is hard to increase the cross sectional area of the pressure inlet passage to a sufficiently large level because of various restrictions imposed on space, layout, etc. As a result, when the sliding contact part between the valve body and the supporting hole wears away owing to deterioration with age, etc., to increase the space between the valve body and the supporting hole, thereby increasing the flow rate of the discharge gas leaking from the valve chamber to the side of the other end of the valve body and the flow rate of the discharge gas through the pressure inlet passage, pressure loss is generated in the pressure inlet passage to make the pressure acting on the other end of the valve body higher than the crank chamber pressure acting on the one end of the valve body, thereby forcing the valve body in the direction for closing the valve hole and causing the control characteristic of the suction chamber pressure to deviate from the initial characteristic.

An object of the present invention is to provide a displacement control valve of a variable displacement compressor for opening and closing a communication passage extending between a portion of the compressor on which discharge pressure acts and a crank chamber of the compressor, thereby controlling the displacement of the compressor, wherein discharge chamber pressure does not act on the valve body in the opening and closing direction, pressures acting on the opposite ends of the valve body are reliably maintained at the same level, and the structure thereof is simple.

Means for Achieving the Object

In accordance with the present invention, there is provided a displacement control valve of a variable displacement compressor for opening and closing a communication passage extending between a portion of the compressor on which discharge pressure acts and a crank chamber of the compressor, thereby controlling the displacement of the compressor, comprising a valve hole communicating with the crank chamber at one end and opening to a valve chamber at the other end, a valve body for opening and closing the valve hole at one end located in the valve chamber communicating with the portion of the compressor on which discharge pressure acts, a bulkhead provided with a supporting hole for slidably supporting the valve body and shutting the other end of the valve body off from the valve chamber, and a driver for driving the valve body in a direction for opening and closing the valve hole, wherein the other end of the valve body is disposed in a portion of the communication passage closer to the crank chamber than the valve hole.

In the displacement control valve in accordance with the present invention, discharge chamber pressure does not act on the valve body in the opening and closing direction because crank chamber pressure acts on the opposite ends of the valve body. The crank chamber pressure is applied to the other end of the valve body not by disposing a pressure inlet passage but by disposing the other end of the valve body in a portion of the communication passage extending between a portion of the compressor on which discharge pressure acts and a crank chamber of the compressor closer to the crank chamber than the valve hole. Therefore, structure of the displacement control valve in accordance with the present invention is simpler than that of the conventional displacement control valve. Even if discharge gas leaks to the side of the other end of the valve body through the space between the valve body and the supporting hole, the leaked gas does not affect to the crank chamber pressure acting on the other end of the valve body because the other end of the valve body is located in the communication passage and the communication passage has a sectional area large enough even to lead the discharge gas to the crank chamber. As a result, the crank chamber pressure reliably acts on the opposite ends of the valve body. Therefore, control characteristic of the suction chamber pressure does not deviate from the initial characteristic.

In accordance with a preferred embodiment of the present invention, the valve body is provided with a cylindrical circumferential surface having a single diameter over the whole length and line contacts a valve seat at the outer peripheral portion of the one end when it closes the valve hole.

The aforementioned structure can completely eliminate the action of the discharge chamber pressure on the valve body in the opening and closing direction and completely prevent opening and closing control of the valve body from being impaired by the discharge pressure.

In accordance with a preferred embodiment of the present invention, the valve seat forms a flat surface, a concave is formed on the one end of the valve body, and the outer peripheral portion of the concave forms an annular sharp edge to form the outer peripheral portion of the one end of the valve body.

When a concave is formed on the one end of the valve body, it becomes possible to make the outer peripheral portion of the one end of the valve body form an annular sharp edge for line contacting the valve seat. When the valve seat forms a flat surface, leakage from the valve is prevented even if the central axis of the valve body drifts.

In accordance with a preferred embodiment of the present invention, the valve hole is formed in the one end of the valve body, a hole is formed in the valve body to extend from the valve hole to the other end of the valve body, and the valve hole formed in the one end of the valve body and the hole extending from the valve hole to the other end of the valve body form a part of the communication passage.

When a part of the communication passage is formed in the valve body, it becomes unnecessary to form the part of the communication passage in the valve casing. As a result, the structure of the displacement control valve is simplified.

In accordance with a preferred embodiment of the present invention, the driver comprises a pressure sensitive mechanism for self controlling the internal pressure of a suction chamber and an electromagnetic actuator for changing an operating point of the pressure sensitive mechanism.

Provision of a pressure sensitive mechanism enhances the accuracy of the control of the suction chamber pressure. Provision of an electromagnetic actuator for changing an operating point of the pressure sensitive mechanism enables the control pressure of the suction chamber to be determined unitarily relative to the control electric current.

In accordance with a preferred embodiment of the present invention, the displacement control valve further comprising a forced opening mechanism for forcing the valve body to move away from the valve seat to open the valve hole when an electric supply to the electromagnetic actuator is stopped.

Provision of a mechanism for forcing the valve hole to open enables the displacement of the variable displacement compressor to rapidly decrease to the minimum level when the operation of the variable displacement compressor becomes unnecessary.

In accordance with the present invention, there is provided a clutch-less variable displacement compressor comprising the aforementioned displacement control valve.

A clutch-less variable displacement compressor is directly connected to an external power source. Therefore, it continues to run so long as the external power source operates even if the operation of the compressor becomes unnecessary. Provision of the forced opening mechanism for forcing the valve body to move away from the valve seat to open the valve hole when the electric supply to the electromagnetic actuator is stopped enables the displacement of the variable displacement compressor to rapidly decrease to the minimum level when the operation of the variable displacement compressor becomes unnecessary, thereby preventing unnecessary energy consumption.

Effect of the Invention

In the displacement control valve in accordance with the present invention, discharge chamber pressure does not act on the valve body in the opening and closing direction because crank chamber pressure acts on the opposite ends of the valve body. The crank chamber pressure is applied to the other end of the valve body not by disposing a pressure inlet passage but by disposing the other end of the valve body in a portion of the communication passage extending between a portion of the compressor on which discharge pressure acts and a crank chamber of the compressor closer to the crank chamber than the valve hole. Therefore, the structure of the displacement control valve in accordance with the present invention is simpler than that of the conventional displacement control valve. Even if discharge gas leaks to the side of the other end of the valve body through the space between the valve body and the supporting hole, the leaked gas does not affect to the crank chamber pressure acting on the other end of the valve body because the other end of the valve body is located in the communication passage and the communication passage has a sectional area large enough even to lead the discharge gas to the crank chamber. As a result, the crank chamber pressure reliably acts on the opposite ends of the valve body. Therefore, control characteristic of the suction chamber pressure does not deviate from the initial characteristic.

Best Mode for Carrying Out the Invention

Preferred embodiments of the present invention will be described.

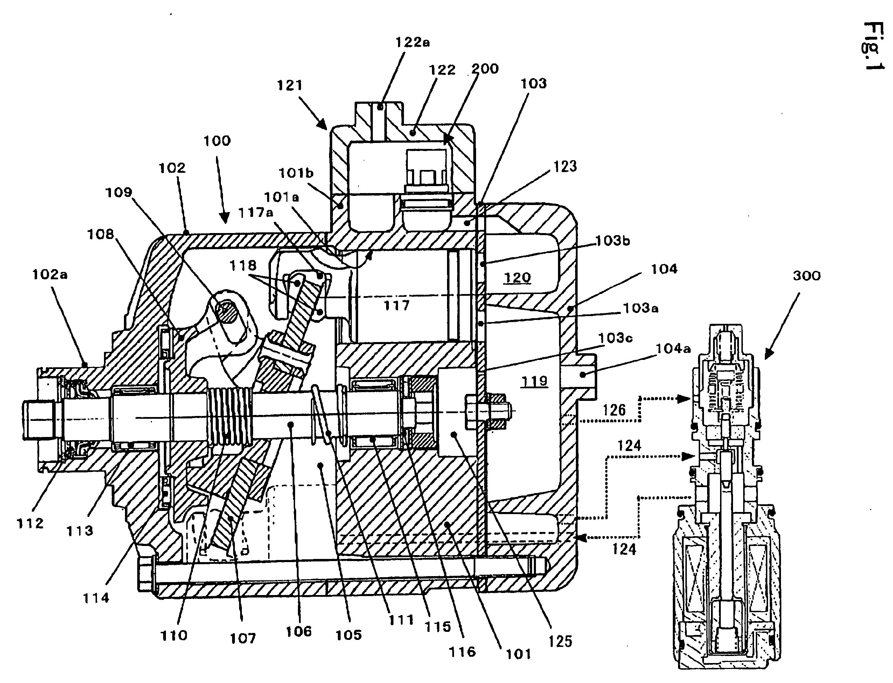

As shown in Figure 1, the variable displacement compressor 100 comprises a cylinder block 101 provided with a plurality of cylinder bores 101a, a front housing 102 opposing one end of the cylinder block 101, and a rear housing 104 opposing the other end of the cylinder block 101 with a valve plate 103 clamped between them.

The cylinder block 101 cooperates with the front housing 102 to define a crank chamber 105. A driving shaft 106 extends across the crank chamber 105. The driving shaft 106 passes through a swash plate 107. The swash plate 107 is connected to a rotor 108 fixed to the driving shaft 106 through a link 109. The driving shaft 106 supports the swash plate 107 variably at an inclination. A coil spring 110 is disposed between the rotor 108 and the swash plate 107 to force the swash plate 107 in a direction for decreasing the inclination to minimum level. A coil spring 111 is also provided. The coil spring 111 and the coil spring 110 are disposed to face opposite surfaces of the swash plate 107. The coil spring 111 forces the swash plate 107 in minimum inclination condition in the direction for increasing the inclination.

The driving shaft 106 extends out of the housing at one end through a boss 102a of the front housing 102 to be connected to a car engine not through an electromagnetic clutch but directly through a transmission. Therefore, the variable displacement compressor 100 is a clutch-less compressor. The car engine and the transmission are not shown in Figure 1. A shaft seal 112 is disposed between the driving shaft 106 and the boss 102a.

The driving shaft 106 is supported radially and longitudinally by bearings 113, 114, 115 and 116.

Pistons 117 are inserted into the cylinder bores 101a. Each piston 117 is provided with a concave 117a at one end. The concave 117a accommodates a pair of shoes 118 for slidably clamping the outer periphery of the swash plate 107. Rotation of the driving shaft 106 is converted to reciprocal movement of the piston 117 through the swash plate 107 and the shoes 118.

The rear housing 104 forms a suction chamber 119 and a discharge chamber 120. The suction chamber 119 communicates with the cylinder bores 101a through communication holes 103a formed in the valve plate 103 and suction valves. The discharge chamber 120 communicates with the cylinder bores 101a through discharge valves and communication holes 103b formed in the valve plate 103. The suction valves and the discharge valves are not shown in Figure 1. The suction chamber 119 communicates with an evaporator of a car air conditioner not shown in Figure 1 through a suction port 104a.

The front housing 102, the cylinder block 101, the valve plate 103 and the rear housing 104 cooperate to form a housing for accommodating a compression mechanism comprising the driving shaft 106, the rotor 108, the link 109, the swash plate 107, the shoes 118, the pistons 117, the cylinder bores 101a, the suction valves, the discharge valves, etc.

A muffler 121 is disposed outside the cylinder block 101. The muffler 121 is formed by a cylindrical wall 101b formed on the outer surface of the cylinder block 101 and a cover 122 having a cylindrical form closed at one end, independent of the cylinder block 101 and connected to the cylindrical wall 101b with a seal member inserted between them. A discharge port 122a is formed in the cover 122. The discharge port 122a connects to a condenser of the car air conditioner not shown in Figure 1.

A communication passage 123 is formed through the cylinder block 101, the valve plate 103 and the rear housing 104 to communicate the muffler 121 with the discharge chamber 120. The muffler 121 and the communication passage 123 cooperate to form a discharge passage extending between the discharge chamber 120 and the discharge port 122a. The muffler 121 forms an expanded space disposed on the way of the discharge passage.

A check valve 200 is disposed in the muffler 121 to open and close the upstream end of the muffler 121.

The front housing 102, the cylinder block 101, the valve plate 103 and the rear housing 104 are disposed adjacent to each other with gaskets inserted between them and assembled as a unitary body with a plurality of through bolts. The gaskets are not shown in Figure 1.

A displacement control valve 300 is fitted to the rear housing 104. The displacement control valve 300 controls the aperture of a communication passage 124 extending between the discharge chamber 120 and the crank chamber 105 to control the flow rate of discharge refrigerant gas passing into the crank chamber 105. The refrigerant gas in the crank chamber 105 is passed into the suction chamber 119 through spaces between the bearings 115, 116 and the driving shaft 106, a space 125 formed in the cylinder block 101 and an orifice hole 103c formed in the valve plate 103.

The displacement control valve 300 can variably control the internal pressure of the crank chamber 105 to variably control the displacement of the variable displacement compressor 100. The displacement control valve 300 controls the supply of electric current to a built-in solenoid based on an external control signal to control the displacement of the variable displacement compressor 100, thereby keeping the internal pressure of the suction chamber 119 introduced into a pressure sensitive chamber of the displacement control valve 300 through a communication passage 126 at a predetermined level. The displacement control valve 300 stops the supply of electric current to the built-in solenoid to compulsorily open the communication passage 124, thereby minimizing the displacement of the variable displacement compressor 100. The displacement control valve 300 can optimally control the suction pressure in response to the external environment.

The structure of the displacement control valve 300 will be described in detail.

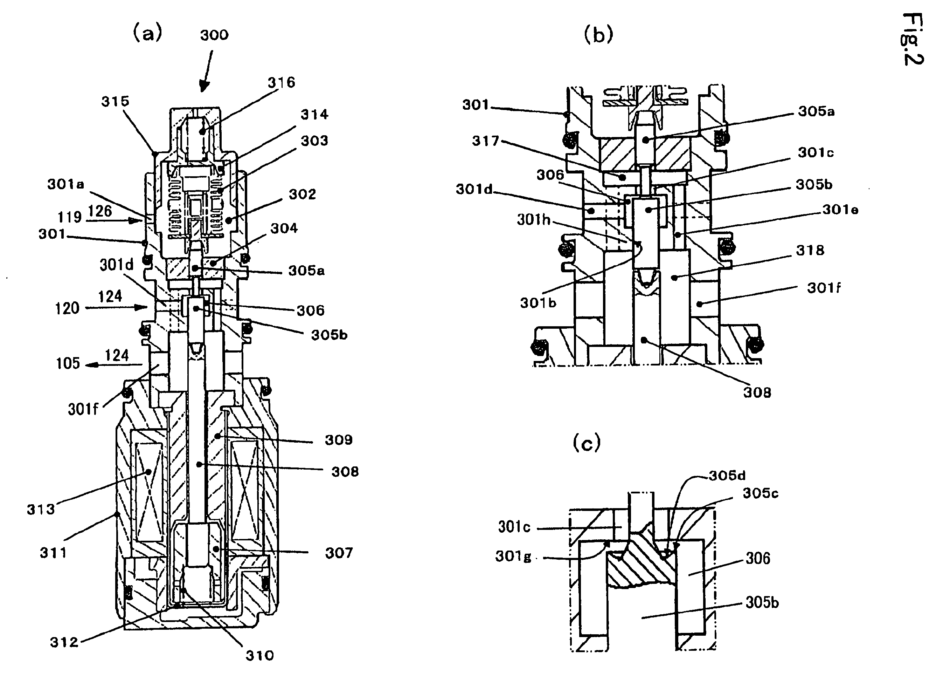

As shown in Figure 2, the displacement control valve 300 comprises a pressure sensitive chamber 302 formed in a valve casing 301 and communicating with the suction chamber 119 through a communication hole 301a and the communication passage 126, a bellows 303 disposed in the pressure sensitive chamber 302, provided with a vacuum inner space and a spring disposed in the inner space, and operating as a pressure sensitive member for receiving internal pressure of the suction chamber 119 (hereinafter called suction chamber pressure), a pressure sensitive rod 305a abutting the bellows 303 at one end and slidably supported by a support member 304 fixed to the valve casing 301, and a valve body 305b formed integrally with the pressure sensitive rod 305a, opening and closing a valve hole 301c at one end disposed in a valve chamber 306 in response to the telescopic motion of the bellows 303, and slidably supported by a supporting hole 301b formed in a bulkhead 301h at the other end portion.

The valve hole 301c communicates with the crank chamber 105 at one end through a space 317, a communication hole 301e, a space 318 and a communication hole 301f, and with the valve chamber 306 at the other end. The valve chamber 306 communicates with the discharge chamber 120 through a communication hole 301d. The communication hole 301d, the valve chamber 306, the valve hole 301c, the space 317, the communication hole 301e, the space 318 and the communication hole 301f form a part of the communication passage 124.

The other end of the valve body 305b is disposed in the space 318 and shut off from the valve chamber 306 by the bulkhead 301h in which the supporting hole 301b is formed. The other end of the valve body 305b is disposed in a portion of the communication passage 124 for communicating the discharge chamber 120 with the crank chamber 105 closer to the crank chamber 105 than the valve hole 301c.

The valve body 305b is provided with a cylindrical circumferential surface having a single diameter over the whole length extending from the one end thereof abutting a flat valve seat 301g formed around the valve hole 301c to the other end thereof located in the space 318 beyond the other end portion slidably supported by the supporting hole 301b. A concave 305d is formed in the one end of the valve body 305b. The outer peripheral portion of the concave 305b forms an annular sharp edge 305c to form the outer peripheral portion of the one end of the valve body 305b abutting the valve seat 301g. The radial width of the annular sharp edge 305c is set at 0.5mm or less. As a result, the annular sharp edge 305c forming the outer peripheral portion of the one end of the valve body 305b line contacts the valve seat 301g when the valve body closes the valve hole.

The bellows 303 is supported by a bellows guide 314 at the end distanced from the pressure sensitive rod 305a. The bellows guide 314 is slidably supported by a pressure setting member 315 press fitted in the valve casing 301. A spring 316 is disposed between the pressure setting member 315 and the bellows guide 314 to force the bellows 303 in the direction for opening the valve. The set pressure of the displacement control valve 300 is adjusted by adjusting the press-fitting depth of the pressure setting member 315.

The displacement control valve 300 further comprises a solenoid rod 308 abutting the other end of the valve body 305b at one end and fixed to a movable iron core 307 at the other end, a fixed iron core 309 opposing the movable iron core 307 at a predetermined distance and allowing the solenoid rod 308 to pass through without contact, a spring 310 for forcing the movable iron core 307 in the direction for closing the valve, a cylindrical member 312 made of non-magnetic material and fixed to a solenoid case 311 to slidably support the outer peripheral portion of the movable iron core 307 and accommodate the fixed iron core 309, and an electromagnetic coil 313 accommodated in the solenoid case 311 to surround the cylindrical member 312.

The internal space of the cylindrical member 312 communicates with the space 318 through a space between the solenoid rod 308 and the fixed iron core 309. The space 318 communicates with the valve hole 301c. Therefore, the internal pressure of the crank chamber 105(hereinafter called crank chamber pressure) acts on the opposite ends of the valve body 305b.

In the displacement control valve 300, the crank chamber pressure is applied to the other end of the valve body 305b not by disposing a pressure inlet passage as taught by Patent Document No.1 but by disposing the other end of the valve body 305b in a portion of the communication passage 124 for communicating the discharge chamber 120 with the crank chamber 105 of the variable displacement compressor 100 closer to the crank chamber 105 than the valve hole 301c. Therefore, the structure of the displacement control valve 300 is simpler than that of the displacement control valve taught by Patent Document No.1.

Even if discharge gas leaks to the side of the other end of the valve body 305b through the space between the valve body 305b and the supporting hole 301b, the leaked gas does not affect the crank chamber pressure acting on the other end of the valve body 305b because the other end of the valve body 305b is disposed in the communication passage 124 and the communication passage 124 has a sectional area large enough even to lead the discharge gas to the crank chamber 105. As a result, the crank chamber pressure reliably acts on the opposite ends of the valve body 305b. Therefore, the control characteristic of the suction chamber pressure does not deviate from the initial characteristic.

In the displacement control valve 300, the valve body 305b is provided with a cylindrical circumferential surface having a single diameter over the whole length and line contacts the valve seat 301g at the annular sharp edge 305c forming the outer peripheral portion of the one end when it closes the valve hole. The aforementioned structure can completely eliminate an action of the discharge chamber pressure on the valve body 305b in the opening and closing direction and completely prevent opening and closing control of the valve body from being impaired by the discharge chamber pressure.

When the concave 305d is formed on the one end of the valve body 305b with a narrow annular outer peripheral portion remaining, it becomes possible to make the outer peripheral portion of the one end of the valve body 305b form an annular sharp edge 305c for line contacting the valve seat 341g. The concave 305d makes it easy to form the annular sharp edge 305c.

In the displacement control valve 300, no space is formed between the annular sharp edge 305c of the valve body 305b and the valve seat 301g even if the central axis of the valve body 305b drifts in radial direction in the narrow space between the valve body and the supporting hole 301b because the valve seat 301g forms a flat surface. Therefore, leakage from the contact part between the annular sharp edge 305c of the valve body 305b and the valve seat 301g is prevented.

The control characteristic of the suction chamber pressure of the displacement control valve 300 is represented by formula (1) below.

$$F(i) + f2 + Sr \cdot Pc + (Sb - Sr) \cdot Ps - f1 = 0$$

$$Ps = -\frac{1}{Sb - Sr} \cdot F(i) - \frac{Sr}{Sb - Sr} \cdot Pc + \frac{f1 - f2}{Sb - Sr} \quad ...(1)$$

Pc : Crank chamber pressure
Ps : Suction chamber pressure
Sr: Cross sectional area of pressure sensitive rod
Sb : Effective area of bellows
f1 : Biassing force of bellows
f2 : Biasing force of spring 310
F(i): Electromagnetic force

When the suction chamber pressure Ps is lower than the level indicated by the formula (1), the bellows 303 expands to move the annular sharp edge 305c of the valve body 305b away from the valve seat 301g, thereby opening the valve hole 301 c, communicating the space 317 with the valve chamber 306 through the valve hole 301c, and opening the communication passage 124 extending between the discharge chamber 120 and the crank chamber 105. Refrigerant gas in the discharge chamber 120 is supplied to the crank chamber 105 through the communication passage 124 to increase the crank chamber pressure, thereby decreasing the inclination of the swash plate 107 to decrease the displacement of the variable displacement compressor 100 and increase the suction chamber pressure. When the suction chamber pressure Ps is higher than the level indicated by the formula (1), the bellows 303 shrinks to make the annular sharp edge 305c of the valve body 305b abut the valve seat 301g, thereby closing the valve hole 301c, shutting off the communication between the space 317 and the valve chamber 306 through the valve hole 301c, and closing the communication passage 124 extending between the discharge chamber 120 and the crank chamber 105. Refrigerant gas in the crank chamber 105 passes into the suction chamber 119 through spaces between the bearings 115, 116 and the driving shaft 106, the space 125 formed in the cylinder block 101, and the orifice hole 103c formed in the valve plate 103 to decrease the crank chamber pressure, thereby increasing the inclination of the swash plate 107 to increase the displacement of the variable displacement compressor 100 and decease the suction chamber pressure. A pressure sensitive mechanism formed by the bellows 303 and the valve body 305b self controls the suction chamber pressure Ps to the level indicated by the formula (1). An electromagnetic actuator formed by the solenoid rod 308, the movable iron core 307, the fixed iron core 309, the spring 310, the solenoid case 311, the cylindrical member 312 and the electromagnetic coil 313 changes the operation point of the pressure sensitive mechanism in response to the level of the electric current flowing through the electromagnetic coil 313.

A control characteristic of the displacement control valve 300 is that the suction chamber pressure Ps decreases as the supply of the electric current i to the electromagnetic coil 313 increases.

In the displacement control valve 300, the pressure sensitive mechanism and the electromagnetic actuator drive the valve body 305b. Providing the displacement control valve 300 with the pressure sensitive mechanism enhances the accuracy of the control of the suction chamber pressure. Providing the displacement control valve 300 with the electromagnetic actuator for changing the operating point of the pressure sensitive mechanism enables the control pressure of the suction chamber to be determined unitarily relative to the control electric current i.

In the displacement control valve 300, the spring 316 forces the valve body 305b to move away from the valve seat 301g, thereby forcibly opening the valve hole 301c when the electric current supply to the electromagnetic actuator is stopped. As a result, it becomes possible to rapidly decrease the displacement of the variable displacement compressor 100 when the operation of the variable displacement compressor 100 becomes unnecessary.

A second preferred embodiment of the present invention will be described.

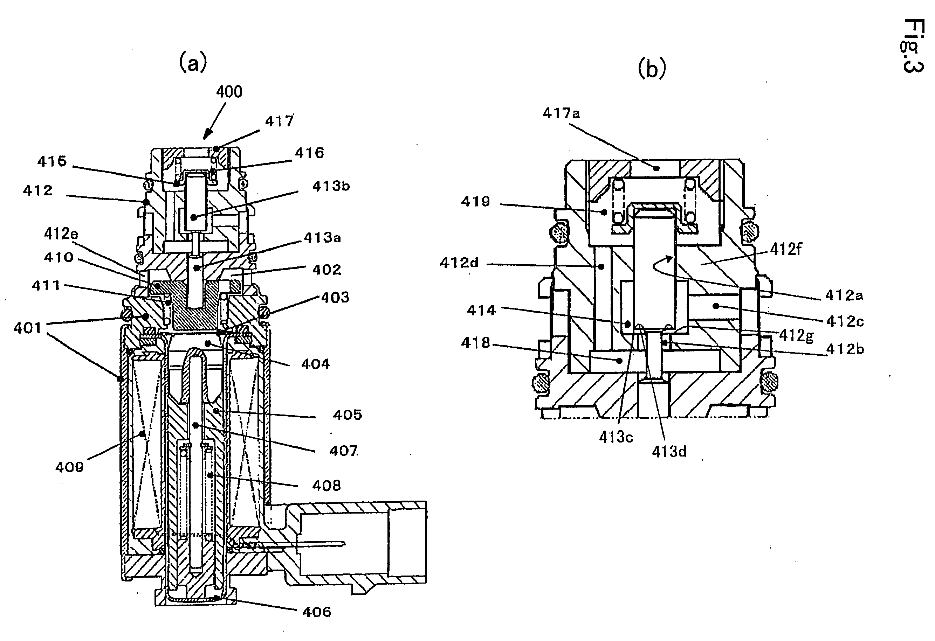

As shown in Figure 3, a displacement control valve 400 comprises a pressure sensitive chamber 402 communicating with the suction chamber 119 through a communication hole 412e formed in a valve casing 412 and the communication passage 126, a diaphragm 403 forming a part of the surrounding wall of the pressure sensitive chamber 402 and operating as a pressure sensing member for receiving the suction chamber pressure, a first movable iron core 404 disposed outside the pressure sensitive chamber 402 and adjacent the diaphragm 403 at one end, a fixed iron core 405 opposing the first movable iron core 404 with a predetermined spacing between them, a cylindrical member 406 for cooperating with the diaphragm 403 to form a vacuum space for accommodating the first movable iron core 404 and the fixed iron core 405, a first spring 408 disposed in the vacuum space to force the first movable iron core 404 toward the diaphragm 403 through a solenoid rod 407, an electromagnetic coil 409 disposed in a solenoid case 401 to surround the cylindrical member 406, a second movable iron core 410 disposed in the pressure sensitive chamber 402 to oppose the first movable iron core 404 with the diaphragm 403 disposed between them, a second spring 411 disposed in the pressure sensitive chamber 402 to force the second movable iron core 410 in the direction away from the diaphragm 403, a pressure sensitive rod 413a slidably supported by the valve casing 412 to abut the second movable iron core 410, and a valve body 413b formed integrally with the pressure sensitive rod 413a. One end of the valve body 413b is disposed in a valve chamber 414 communicating with the discharge chamber 120 through a communication hole 412c. The other end portion of the valve body 413b is slidably supported by a supporting hole 412a formed in a bulkhead 412f. The said one end of the valve body 413b opens and closes a valve hole 412b in response to the telescopic motion of the diaphragm 403.

The valve hole 412b communicates with the crank chamber 105 at one end through a space 418, a communication hole 412d, a space 419 and a communication hole 417a and with the valve chamber 414 at the other end. The valve chamber 414 communicates with the discharge chamber 120 through the communication hole 412c. The communication hole 412c, the valve chamber 414, the valve hole 412b, the space 418, the communication hole 412d, the space 419 and the communication hole 417a form a part of the communication passage 124 extending between the discharge chamber 120 and the crank chamber 105.

The other end of the valve body 413b is disposed in the space 419 to be shut off from the valve chamber 414 by the bulkhead 412f provided with the supporting hole 412a. The other end of the valve body 413b is disposed in the portion of the communication passage 124 closer to the crank chamber 105 than the valve hole 412b.

A third spring 416 is disposed in the space 419 to force the valve body 413b in the closing direction through a spring guide 415. An adjusting member 417 is screwed into the valve casing 412. The adjusting member 417 cooperates with the valve casing 412 to form the space 419 and abuts one end of the third spring 416 to adjust the biasing force of the third spring 416. The communication hole 417a is formed in the adjusting member 417.

The valve body 413b is provided with a cylindrical circumferential surface having a single diameter over the whole length extending from one end thereof abutting a flat valve seat 412g formed around the valve hole 412b to the other end thereof disposed in the space 419 beyond the other end portion slidably supported by the supporting hole 412a. A concave 413d is formed in the one end of the valve body 413b. The outer peripheral portion of the concave 413d forms an annular sharp edge 413c and also the outer peripheral portion of the one end of the valve body 413b abutting the valve seat 412g. The radial width of the annular sharp edge 413c is set at 0.5mm or less. As a result, the annular sharp edge 413c forming the outer peripheral portion of the one end of the valve body 413b line contacts the valve seat 412g when the valve body closes the valve hole.

The crank chamber pressure acts on the opposite ends of the valve body 413b.

In the displacement control valve 400, the crank chamber pressure is applied to the other end of the valve body 413b not by disposing a pressure inlet passage as taught by Patent Document No.1 but by disposing the other end of the valve body 413b in a portion of the communication passage 124 for communicating the discharge chamber 120 with the crank chamber 105 of the variable displacement compressor 100 closer to the crank chamber 105 than the valve hole 412b. Therefore, the structure of the displacement control valve 400 is simpler than that of the displacement control valve taught by Patent Document No.1.

Even if discharge gas leaks to the side of the other end of the valve body 413b through the space between the valve body 413b and the supporting hole 412a, the leaked gas does not affect to the crank chamber pressure acting on the other end of the valve body 413b because the other end of the valve body 413b is disposed in the communication passage 124 and the communication passage 124 has a sectional area large enough even to lead the discharge gas to the crank chamber 105. As a result, the crank chamber pressure reliably acts on the opposite ends of the valve body 413b. Therefore, the control characteristic of the suction chamber pressure does not deviate from the initial characteristic.

In the displacement control valve 400, the valve body 413b is provided with a cylindrical circumferential surface having a single diameter over the whole length and line contacts the valve seat 412g at the annular sharp edge 413c forming the outer peripheral portion of the one end when it closes the valve hole. The aforementioned structure can completely elininate an action of the discharge chamber pressure on the valve body 413b in the opening and closing direction and completely prevent opening and closing control of the valve body 413b from being impaired by the discharge chamber pressure.

When the concave 413d is formed on the one end of the valve body 413b with a narrow annular outer peripheral portion remaining, it becomes possible to make the outer peripheral portion of the one end of the valve body 413b form an annular sharp edge 413c for line contacting the valve seat 301g. The concave 413d makes it easy to form the annular sharp edge 413c.

In the displacement control valve 400, no space is formed between the annular sharp edge 413c of the valve body 413b and the valve seat 412g even if the central axis of the valve body 413b drifts in radial direction in the narrow space between the valve body and the supporting hole 412a because the valve seat 412g forms a flat surface. Therefore, leakage from the contact part between the annular sharp edge 413c of the valve body 413b and the valve seat 412g is prevented.

When the electric current is supplied to the electromagnetic coil 409 of the displacement control valve 400, the second movable iron core 410 is drawn and connected to the first movable iron core 404 with the diaphragm 403 clamped between them. Thus, the second movable iron core 410 is integrally connected to the diaphragm 403. Furthermore, the second movable iron core 410 is connected to the pressure sensitive rod 413a and also the valve body 413b. As a result, the valve body 413b operates in response to the suction chamber pressure and the electromagnetic force. The control characteristic of the suction chamber pressure of the displacement control valve 400 is represented by formula (2) below.

$$f3 + Sr \cdot Pc + (Sd - Sr) \cdot Ps + F(i) - f1 - f2 = 0$$

$$Ps = -\frac{1}{Sd - Sr} \cdot F(i) - \frac{Sr}{Sd - Sr} \cdot Pc + \frac{f1 + f2 - f3}{Sd - Sr} \quad ...(2)$$

Pc : Crank chamber pressure
Ps: Suction chamber pressure
Sr: Goss sectional area of pressure sensitive rod
Sd : Effective area of diaphragm
f1 : Biasing force of spring 408
f2 : Biasing force of spring 411
f3 : Biasing force of spring 416
F(i) : Electromagnetic force

When the suction chamber pressure Ps is lower than the level indicated by the formula (2), the diaphragm 403 expands toward the pressure sensitive chamber 402 to force the second movable iron core 410 in the direction for opening the valve, thereby moving the annular sharp edge 413c of the valve body 413b away from the valve seat 412g to open the valve hole 412b. The space 418 communicates with the valve chamber 414 through the valve hole 412b to open the communication passage 124 extending between the discharge chamber 120 and the crank chamber 105. Refrigerant gas in the discharge chamber 120 is supplied to the crank chamber 105 through the communication passage 124 to increase the crank chamber pressure, thereby decreasing the inclination of the swash plate 107 to decrease the displacement of the variable displacement compressor 100 and increase the suction chamber pressure. When the suction chamber pressure Ps is higher than the level indicated by the formula (2), the diaphragm 403 expands in the direction away from the pressure sensitive chamber 402 to draw the second movable iron core 410 in the direction for closing the valve. The annular sharp edge 413c of the valve body 413b abuts the valve seat 412g to close the valve hole 412b, thereby shutting off the communication between the space 418 and the valve chamber 414 through the valve hole 412b, and closing the communication passage 124 extending between the discharge chamber 120 and the crank chamber 105. Refrigerant gas in the crank chamber 105 passes into the suction chamber 119 through spaces between the bearings 115, 116 and the driving shaft 106, the space 125 formed in the cylinder block 101, and the orifice hole 103c formed in the valve plate 103 to decrease the crank chamber pressure, thereby increasing the inclination of the swash plate 107 to increase the displacement of the variable displacement compressor 100 and decease the suction chamber pressure. A pressure sensitive mechanism formed by the diaphragm 403 and the valve body 413b self controls the suction chamber pressure Ps to the level indicated by the formula (2). An electromagnetic actuator formed by the solenoid rod 407, the first movable iron core 404, the fixed iron core 405, the spring 408, the solenoid case 401, the cylindrical member 406, the electromagnetic coil 409 and the second movable iron core 410 changes the operation point of the pressure sensitive mechanism in response to the level of the electric current i flowing through the electromagnetic coil 409.

A control characteristic of the displacement control valve 400 is that the suction chamber pressure Ps decreases as the supply of the electric current i to the electromagnetic coil 409 increases.

In the displacement control valve 400, the pressure sensitive mechanism and the electromagnetic actuator drive the valve body 413b. Providing the displacement control valve 400 with the pressure sensitive mechanism enhances the accuracy of the control of the suction chamber pressure. Providing the displacement control valve 400 with the electromagnetic actuator for changing the operating point of the pressure sensitive mechanism enables the control pressure of the suction chamber to be determined unitarily relative to the control electric current.

In the displacement control valve 400, the biasing force of the second spring 411 is set at a level larger than that of the third spring 416. Therefore, the second spring 411 forces the valve body 413b to move away from the valve seat 412g, thereby forcibly opening the valve hole 412b when the electric current supply to the electromagnetic actuator is stopped. As a result it becomes possible to rapidly decrease the displacement of the variable displacement compressor 100 when the operation of the variable displacement compressor 100 becomes unnecessary.

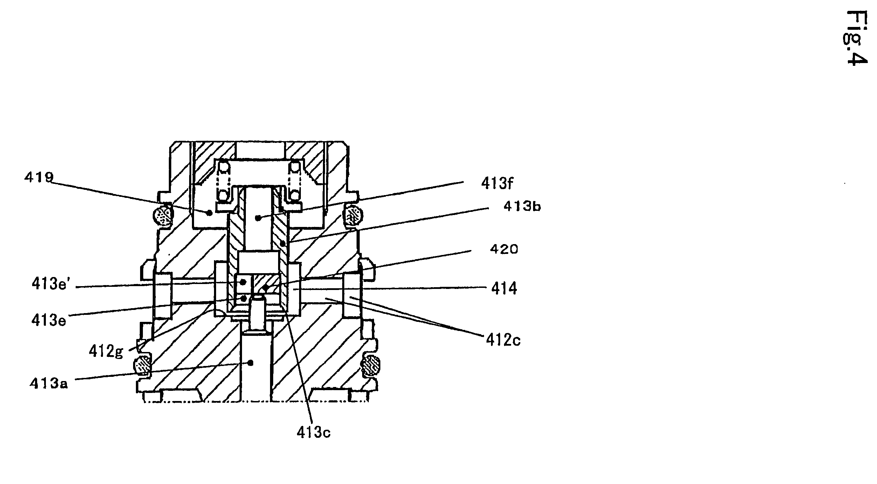

In the displacement control valve 400, the valve chamber 414 can be communicated with the space 419 through a communication hole formed in the valve body 413b as shown in Figure 4 instead through the valve hole 412b formed in the valve casing 412, the space 418 and the communication hole 412d. The communication hole is formed by a valve hole 413e formed in the one end of the valve body 413b and a hole 413f extending from the valve hole 413e to the other end of the valve body 413b. The pressure sensitive rod 413a is independent of the valve body 413b. One end of the pressure sensitive rod 413a abuts a bracket 420 press fitted in the valve hole 413e to drive the valve body 413b. The bracket 420 closes only a part of the valve hole 413e. Therefore, a part 413e' remains open. As a result, the valve chamber 414 communicates with the space 419 through a communication hole formed in the valve body 413b and comprising the valve hole 413e and the hole 413f. The outer peripheral portion of the one end of the valve body 413b forms an annular sharp edge 413c for abutting the valve seat 412g when the valve is closed. The valve hole 413e and the hole 413f form a part of the communication passage 124 extending between the discharge chamber 120 and the crank chamber 105.

When a part of the communication passage 124 is formed in the valve body 413b, it becomes unnecessary to form the said part in the valve casing 412 and the structure of the displacement control valve 400 is simplified.

As the clutch-less variable displacement compressor 100 is directly connected to the external power source, i.e., the car engine, it continues to run so long as the car engine operates even if the operation of the car air conditioner or the operation of the compressor becomes unnecessary. The displacement control valves 300 and 400 are provided with the mechanism for forcibly opening the valve hole 301c and the mechanism for forcibly opening the valve hole 412b or 413e, respectively. Therefore, it is possible to rapidly decrease the displacement of the clutch less variable displacement compressor 100 to the minimum level when the operation of the clutch less variable displacement compressor 100 becomes unnecessary, thereby preventing unnecessary energy consumption.

Discharge pressure portions other than the discharge chamber 120, for example the muffler 121, the communication passage 123, etc., can be communicated with the crank chamber 105.

The valve seats 301g and 412g can be made funnel-shaped.

The sectional are of the portions of the valve bodies 305b and 413b extending in the valve chambers 306 and 414 can be made different from that of the portions supported by the supporting holes 301b and 412a to make the discharge chamber pressure act on the valve bodies 305b and 413b.

The displacement control valves 300 and 400 can be made as internal control valves without electromagnetic actuators.

The displacement control valves 300 and 400 can be made as solenoid valves without pressure sensitive mechanisms.

The orifice hole 103c can be a variable flow rate aperture.

Industrial Applicability

Variable displacement compressors using $CO_2$ or R152a instead of R134a in common use nowadays can be equipped with the displacement control valves in accordance with the present invention.

Various kinds of variable displacement compressors such as wobble plate variable displacement compressors, motor driven variable displacement compressors, variable displacement compressors equipped with electromagnetic clutch, clutch-less variable displacement compressors, etc. can be equipped with the displacement control valves in accordance with the present invention.

Brief Description of the Drawings

Figure 1 is a sectional view of a variable displacement swash plate compressor provided with a displacement control valve in accordance with a preferred embodiment of the present invention.
Figure 2 is a set of sectional views of a displacement control valve in accordance with the first preferred embodiment of the present invention. (a) is a general sectional view, (b),(c) are fragmentary enlarged sectional views of (a).
Figure 3 is a set of sectional views of a displacement control valve in accordance with the second preferred embodiment of the present invention. (a) is a general sectional view, (b) is a fragmentary enlarged sectional view of (a).
Figure 4 is a fragmentary sectional view of a variation of the displacement control valve in accordance with the second preferred embodiment of the present invention.

Brief Description of the Reference Numerals

100 Variable displacement swash plate compressor
119 Suction chamber
120 Discharge chamber
300, 400 Displacement control valve

305b, 413b Valve body
301c, 412b, 413e Valve hole
306, 414 Valve chamber
317, 318, 418, 419 Space
301e, 412d Communication hole
305c, 413c Annular sharp edge

**Claims**

1. A displacement control valve (300, 400) of a variable displacement compressor (100) adapted to open and close a communication passage (124) extending between a portion of the compressor (100) on which discharge pressure acts and a crank chamber (105) of the compressor (100), thereby controlling the displacement of the compressor (100), comprising a valve hole (301c, 412b, 413e) having one end communicating with the crank chamber (105) and another end opening to a valve chamber (306, 414), a valve body (305b, 413b) having one end located in the valve chamber (306, 414) communicating with the portion of the compressor (100) on which discharge pressure acts for opening and closing the valve hole (301c, 412b, 413e) and another end opposite to the one end, a bulkhead (301h, 412f) provided with a supporting hole (301b, 412a) for slidably supporting the valve body (305b, 413b) and shutting the other end of the valve body (305b, 413b) off from the valve chamber (306, 414), and a driver for driving the valve body (305b, 413b) in a direction for opening and another direction for closing the valve hole (301c, 412b, 413e), **characterized in that** the other end of the valve body (305b, 413b) is disposed in a portion of the communication passage (124) closer to the crank chamber (105) than the valve hole (301c, 412b, 413e) when communicating through the communication passage (124).

2. The displacement control valve (300, 400) of claim 1, wherein the valve body (305b, 413b) is provided with a cylindrical circumferential surface having a single diameter over the whole length and line contacts a valve seat (301g, 412g) at the outer peripheral portion of the one end when it closes the valve hole (301c, 412b, 413e).

3. The displacement control valve (300, 400) of claim 2, wherein the valve seat (301g, 412g) forms a flat surface, a concave is formed on the one end of the valve body (305b, 413b), and the outer peripheral portion of the concave forms an annular sharp edge to form the outer peripheral portion of the one end of the valve body (305b, 413b).

4. The displacement control valve (300, 400) of any one of claims 1 to 3, wherein the valve hole (301c, 412b, 413e) is formed in the one end of the valve body (305b, 413b), a hole (413f) is formed in the valve body (305b, 413b) to extend from the valve hole (301c, 412b, 413e) to the other end of the valve body (305b, 413b), and the valve hole (301c, 412b, 413e) formed in the one end of the valve body (305b, 413b) and the hole (413f) extending from the valve hole (301c, 412b, 413e) to the other end of the valve body (305b, 413b) form a part of the communication passage (124).

5. The displacement control valve (300, 400) of any one of claims 1 to 4, wherein the driver comprises a pressure sensitive mechanism for self controlling the internal pressure of a suction chamber (119) and an electromagnetic actuator for changing an operating point of the pressure sensitive mechanism.

6. The displacement control valve (300, 400) of any one of claims 1 to 5, further comprising a forced opening mechanism for forcing the valve body (305b, 413b) to move away from the valve seat (301g, 412g) to open the valve hole (301c, 412b, 413e) when an electric supply to the electromagnetic actuator is stopped.

7. A clutch-less variable displacement compressor (100) comprising a displacement control valve (300, 400) of claim 6.

**Patentansprüche**

1. Verdrängungssteuerungsventil (300, 400) eines Kompressors (100) mit variabler Verdrängung, das angepasst ist, eine sich zwischen einem Abschnitt des Kompressors (100), auf den ein Ausstoßdruck wirkt, und einer Kurbelkammer (105) des Kompressors (100) erstreckende Verbindungspassage (124) zu öffnen und zu schließen und dabei die Verdrängung des Kompressors (100) zu steuern, aufweisend
ein Ventilloch (301c, 412b, 413e), das ein mit der Kurbelkammer (105) kommunizierendes Ende und ein anderes Ende hat, das zu einer Ventilkammer (306, 414) offen ist,

einen Ventilkörper (305b, 413b), der ein Ende, das sich in der Ventilkammer (306, 414) befindet, die mit dem Abschnitt des Kompressors (100), auf den der Ausstoßdruck zum Öffnen und Schließen des Ventillochs (301c, 412b, 413e) wirkt, verbunden ist, und ein dem einen Ende gegenüberliegendes anderes Ende hat,

eine Trennwand (301h, 412f), die mit einem Lagerungsloch (301b, 412a) versehen ist, um den Ventilkörper (305b, 413b) gleitend zu lagern und das andere Ende des Ventilkörpers (305b, 413b) von der Ventilkammer (306, 414) abzusperren, und

einen Antrieb zum Antreiben des Ventilkörpers (305b, 413b) in einer Richtung zum Öffnen und einer anderen Richtung zum Schließen des Ventillochs (301c, 412b, 413e),

**dadurch gekennzeichnet, dass**

das andere Ende des Ventilkörpers (305b, 413b) in einem Abschnitt der Verbindungspassage (124), der näher an der Kurbelkammer (105) als das Ventilloch (301c, 412b, 413e) ist, angeordnet ist, wenn durch die Verbindungspassage (124) eine Verbindung besteht.

2. Verdrängungssteuerungsventil (300, 400) von Anspruch 1, wobei der Ventilkörper (305b, 413b) mit einer zylindrischen Umfangsfläche versehen ist, die über die gesamte Länge einen einzigen Durchmesser hat, und an dem äußeren Umfangsabschnitt von dem einen Ende mit einem Ventilsitz (301g, 412g) eine Linienberührung hat, wenn er das Ventilloch (301c, 412b, 413e) verschließt.

3. Verdrängungssteuerungsventil (300, 400) von Anspruch 2, wobei der Ventilsitz (301g, 412g) eine flache Oberfläche bildet, eine Austiefung an dem einen Ende des Ventilkörpers (305b, 413b) gebildet ist, und der äußere Umfangsabschnitt der Austiefung eine ringförmige scharfe Kante bildet, um den äußeren Umfangsabschnitt des einen Endes des Ventilkörpers (305b, 413b) zu bilden.

4. Verdrängungssteuerungsventil (300, 400) von einem der Ansprüche 1 bis 3, wobei das Ventilloch (301c, 412b, 413e) in dem einen Ende des Ventilkörpers (305b, 413b) gebildet ist, ein Loch (413f) in dem Ventilkörper (305b, 413b) gebildet ist, um sich von dem Ventilloch (301c, 412b, 413e) zu dem anderen Ende des Ventilkörpers (305b, 413b) zu erstrecken, und das Ventilloch (301c, 412b, 413e), das in dem einen Ende von dem Ventilkörper (305b, 413b) gebildet ist, und das Loch (413f), das sich von dem Ventilloch (301c, 412b, 413e) zu dem anderen Ende des Ventilkörpers (305b, 413b) erstreckt, einen Teil der Verbindungspassage (124) bilden.

5. Verdrängungssteuerungsventil (300, 400) von einem der Ansprüche 1 bis 4, wobei der Treiber einen druckempfindlichen Mechanismus zur Selbststeuerung des inneren Drucks einer Ansaugkammer (119) und einen elektromagnetischen Aktor zum Verändern eines Betriebspunkts des druckempfindlichen Mechanismus' aufweist.

6. Verdrängungssteuerungsventil (300, 400) von einem der Ansprüche 1 bis 5, ferner einen Zwangsweises-Öffnen-Mechanismus aufweisend, um den Ventilkörper (305b, 413b) dazu zu zwingen, sich von dem Ventilsitz (301g, 412g) weg zu bewegen, um das Ventilloch (301c, 412b, 413e) zu öffnen, wenn eine elektrische Versorgung zu dem elektromagnetischen Aktor beendet ist.

7. Kupplungsloser Kompressor (100) mit variabler Verdrängung, der ein Verdrängungssteuerungsventil (300, 400) von Anspruch 6 aufweist.

**Revendications**

1. Soupape de commande de déplacement (300, 400) d'un compresseur à déplacement variable (100) susceptible d'ouvrir et de fermer un passage de mise en communication (124) s'étendant entre une partie du compresseur (100) sur laquelle agit une pression de refoulement et une chambre de manivelle (105) du compresseur (100), de façon à commander le déplacement du compresseur (100), comprenant un orifice de soupape (301c, 412b, 413e) dont une extrémité est en communication avec la chambre de manivelle (105) tandis que l'autre extrémité s'ouvre vers une chambre de soupape (303, 414), un corps de soupape (305b, 413b) dont une extrémité est située dans la chambre de soupape (306, 414) en communication avec la partie du compresseur (100) sur laquelle agit la pression de refoulement pour permettre d'ouvrir et de fermer l'orifice de soupape (301c, 412b, 413e) et une autre extrémité opposée à cette première extrémité, une cloison de séparation (301h, 412f) équipée d'un orifice de support (301b, 412a) pour supporter de manière mobile en glissement le corps de soupape (305b, 413b) et fermer l'autre extrémité du corps de soupape (305b, 413b) en l'écartant la chambre de soupape (306, 414), et un élément d'entrainement pour entrainer le corps de soupape (305b, 413b) dans la direction d'ouverture et une autre direction pour fermer l'orifice de soupape (301 c, 412b , 413e),

**caractérisée en ce que**

l'autre extrémité du corps de soupape (305b, 413b) est située dans une partie du passage de mise en communication (124) plus proche de la chambre de manivelle (105) que de l'orifice de soupape (301c, 412b, 413e) lors de la mise en communication par le passage de mise en communication (124).

2. Soupape de commande de déplacement (300, 400) conforme à la revendication 1,
dans laquelle
le corps de soupape (305b, 413b) est équipé d'une surface périphérique cylindrique ayant un diamètre unique sur la totalité de sa longueur et vient en contact linéaire avec un siège de soupape (301g, 412g) au niveau de la périphérique externe de l'extrémité lorsqu'il ferme l'orifice de soupape (301c, 412b, 413e).

3. Soupape de commande de déplacement (300, 400) conforme à la revendication 2,
dans laquelle
le siège de soupape (301g, 412g) forme une surface plane, une concavité étant formée à l'extrémité du corps de soupape (305b, 413b), et la partie périphérique externe de la concavité formant un bord annulaire pointu pour former la partie périphérique externe de l'extrémité du corps de soupape (305b, 413b).

4. Soupape de commande de déplacement (300, 400) conforme à l'une quelconque des revendications 1 à 3,
dans laquelle
l'orifice de soupape (301c, 412b, 413e) est formé à l'extrémité du corps de soupape (305b, 413b), un orifice (413f) est formé dans le corps de soupape (305b, 413b) pour s'étendre de l'orifice de soupape (301c, 412b, 413e) vers l'autre extrémité du corps de soupape (305b, 413b), et l'orifice de soupape (301c, 412b, 413e) formé à l'extrémité du corps de soupape (305b, 413b) et l'orifice (413f) s'étendant de l'orifice de soupape (301c, 412b, 413e) vers l'autre extrémité du corps de soupape (305b, 413b) forme une partie du passage de mise en communication (124).

5. Soupape de commande de déplacement (300, 400) conforme à l'une quelconque des revendications 1 à 4,
dans laquelle
l'organe d'entrainement comprend un mécanisme sensible à la pression pour commander automatiquement la pression interne d'une chambre d'aspiration (119) et un actionneur électro magnétique permettant de modifier le point opérationnel du mécanisme sensible à la pression.

6. Soupape de commande de déplacement (300, 400) conforme à l'une quelconque des revendications 1 à 5,
comprenant en outre
un mécanisme d'ouverture forcée pour obliger le corps de soupape (305b, 413b) à se déplacer en s'écartant du siège de soupape (301g, 412g) pour ouvrir l'orifice de soupape (301c, 412b, 413e) lorsque l'alimentation électrique de l'actionneur électro magnétique est coupée.

7. Compresseur à déplacement variable à embrayage automatique (100) comprenant une soupape de commande de déplacement (300, 400) conforme à la revendication 6.

Fig.1

Fig.2

# Fig.3

(a)

(b)

# Fig.4

**EP 2 042 732 B1**

**REFERENCES CITED IN THE DESCRIPTION**

**Patent documents cited in the description**

- EP 907021 A
- JP 11107929 A
- EP 0907021 A2
- KR 20060082414 A
- EP 1681466 A2
- EP 1223342 A1
- EP 1507109 A1
- EP 1574711 A2